## Europäisches Patentamt
## European Patent Office
## Office européen des brevets

(11) Veröffentlichungsnummer: **0 166 022**
**B1**

(12) **EUROPÄISCHE PATENTSCHRIFT**

(45) Veröffentlichungstag der Patentschrift:
**01.04.87**

(51) Int. Cl.⁴: **C 02 F  1/42,** B 01 J  47/02

(21) Anmeldenummer: **84107552.6**

(22) Anmeldetag: **29.06.84**

(54) **Gerät zur Verbesserung der Qualität von Trinkwasser durch Ionenaustausch.**

(43) Veröffentlichungstag der Anmeldung:
**02.01.86 Patentblatt 86/1**

(45) Bekanntmachung des Hinweises auf die Patenterteilung:
**01.04.87 Patentblatt 87/14**

(84) Benannte Vertragsstaaten:
**AT BE CH FR GB IT LI LU NL SE**

(56) Entgegenhaltungen:
**EP - A - 0 002 203**
**FR - A - 2 091 499**
**FR - A - 2 102 655**
**FR - A - 2 207 092**
**US - A - 2 482 727**
**US - A - 2 761 832**

(73) Patentinhaber: **Alhäuser, Erich, Am Hölzeberg 2,
D-5412 Ransbach-Baumbach (DE)**

(72) Erfinder: **Alhäuser, Erich, Am Hölzeberg 2,
D-5412 Ransbach-Baumbach (DE)**

(74) Vertreter: **Beyer, Werner, Dipl.-Ing. et al,
Staufenstrasse 36, II P.O. Box 174109,
D-6000 Frankfurt/Main (DE)**

ACTORUM AG

## Beschreibung

Die Erfindung betrifft ein Gerät zur Verbesserung der Qualität von Trinkwasser, mit einem Gehäuse, von welchem eine wenigstens einen Ionenaustauscher sowie einen zumindest bakteriostatisch wirkenden Stoff wie insbesondere Silber in dissoziierbarer Form enthaltende Patrone auswechselbar aufgenommen ist.

Geräte dieser Art mit einer ein Ionenaustauschmaterial enthaltenden Patrone sind beispielsweise aus der DE-AS 27 52 581 und der DE-OS 30 08 208 bekannt. Aus der DE-OS 26 56 465 ist es ferner bekannt, zusätzlich zu dem Ionenaustauschmaterial Silber in dissoziierbarer Form in die Patrone einzuschliessen, um dadurch das Anwachsen von Keimen am Ionenaustauschermaterial zu verhindern und, soweit möglich, darüber hinaus die Keimzahl im behandelten Wasser zu senken.

Sämtliche bekannten Geräte sind zum Anschluss an ein Wasserleitungssystem bestimmt und arbeiten somit unter dem im Wasserleitungssystem herrschenden Druck. In manchen Fällen ist jedoch eine solche Abhängigkeit wegen des Erfordernisses eines bleibenden oder vorübergehenden Anschlusses an die Wasserleitung unerwünscht. Dies ist beispielsweise bei der Zubereitung von Trockennahrung insbesondere für Kleinstkinder in Haushalten der Fall, wo ein solcher Anschluss an die Wasserleitung entweder gar nicht möglich ist oder zumindest als unbequem oder umständlich empfunden wird.

Erwünscht ist vielmehr ein vom Wasserleitungsnetz unabhängiges Gerät, das durch Einfüllen der gewünschten Wassermenge in eine Einfüllöffnung eine entsprechend grosse Menge von in seiner Qualität verbessertem Wasser an einem Auslass liefert. Dabei besteht jedoch in besonderem Masse die Gefahr der Keimverseuchung des Ionenaustauschermaterials in den Stillstandszeiten des Gerätes. Insbesondere muss vermieden werden, dass das Ionenaustauschmaterial bei längeren Pausen austrocknet, so dass der bakteriostatisch wirkende Stoff nicht zu wirken vermag. Weiterhin muss gewährleistet sein, dass über den Auslauf keine Bakterien und anderen Schadstoffe von rückwärts zum Austauschermaterial gelangen und sich dort vermehren, wo das Wasser bei der nächsten Benutzung abgezogen wird.

Der Erfindung liegt deshalb die Aufgabe zugrunde, ein Gerät der eingangs genannten Art dahingehend auszubilden, dass es unter Beachtung der vorstehenden Forderungen unabhängig vom Wasserleitungsnetz einsetzbar ist.

Erfindungsgemäss wird diese Aufgabe gelöst durch die Kombination folgender Merkmale:

a) die Patrone ist als im wesentlichen geschlossener aufrecht stehender Behälter ausgebildet und von einer mit Abstand vor dem Behälterboden endenden Trennwand in eine an eine Einlassöffnung anschliessende, abwärts durchströmte erste Kammer und eine zu einer Auslassöffnung führende, aufwärts durchströmte zweite Kammer unterteilt,

b) die Einlassöffnung der Patrone ist wesentlich höher gelegen als die Auslassöffnung,

c) die Einlassöffnung und die Auslassöffnung der Patrone sind mit Partikelfiltern versehen,

d) wenigstens die zweite Kammer der Patrone ist über die Höhe der Einlassöffnung hinaus nach oben verlängert und am oberen Ende entlüftet,

e) an die Einlassöffnung der Patrone ist gehäuseseitig ein Einfülltrichter dichtend anschliessbar, dessen Oberkante wesentlich tiefer als die Entlüftung liegt, und

f) an die Auslassöffnung der Patrone ist gehäuseseitig ein Standrohr anschliessbar, das mit seinem unterhalb der Einlassöffnung liegenden oberen Ende in einen mit Gefälle ausgebildeten Auslasskanal mündet.

Durch die Unterteilung der Patrone in eine abwärts durchströmte erste Kammer und eine aufwärts durchströmte zweite Kammer wird sichergestellt, dass die Ionenaustauscherfüllung ständig unter Wasser steht und nicht austrocknen kann. Dadurch vermag auch der bakteriostatisch wirkende Stoff seine volle Wirkung zu entfalten und verhindert, dass sich Keime in der Ionenaustauscherfüllung vermehren. Ein selbsttätiges Auslaufen des Gerätes ist bei normalem Gebrauch, d.h. solange das Gerät nicht absichtlich ausgekippt wird, verhindert.

Die erfindungsgemässe Ausbildung des Gerätes führt zu insgesamt fünf voneinander verschiedenen charakteristischen Niveauhöhen, die für den Betrieb eines solchen Gerätes von wesentlicher Bedeutung sind, und zwar, von unten nach oben betrachtet,

— der Höhe der Auslassöffnung der Patrone,

— der Höhe des oberen Endes des Standrohres,

— der Höhe der Einlassöffnung,

— der Höhe der Oberkante des Einfülltrichters und

— der Höhe der Entlüftung wenigstens der zweiten Kammer der Patrone.

Hierdurch werden in Verbindung mit dem Gefälle im Auslasskanal folgende für die Unabhängigkeit vom Wasserleitungsnetz wesentliche Funktionen des erfindungsgemässen Gerätes erreicht:

— Beim Füllen des Gerätes stellt sich innerhalb der Patrone ein Wasserpegel auf der Höhe des oberen Endes des Standrohres ein, das seinerseits Wasser mit dem bakteriostatisch wirkenden Stoff enthält. Dieser Pegel wird in der zweiten Kammer durch die Entlüftung an deren oberem Ende ermöglicht;

— durch die Entlüftung der zweiten Kammer eintretende Keime werden innerhalb der Patrone durch den bakteriostatisch wirkenden Stoff im Wasser abgetötet, bevor sie zu dem um die Länge des Standrohres unter dem Wasserpegel sich öffnenden Auslass der Patrone gelangen können;

— der mit Gefälle ausgebildete Auslasskanal läuft nach dem Überlaufen — ebenso wie nach jeder bestimmungsgemässen Benutzung des Gerätes — leer und trocknet aus, wodurch grössere Keimansammlungen innerhalb des Kanals verhindert werden;

— in das Standrohr dennoch gelangende Keime werden dort durch den bakteriostatisch wirkenden Stoff im Wasser abgetötet;

— bei der bestimmungsgemässen Benutzung des Gerätes vermag der Wasserspiegel in der zweiten Kammer durch die Entlüftung bis maximal zur Oberkante des Trichters anzusteigen, um anschliessend wieder auf die Höhe des oberen Standrohrendes abzusinken. Keime, die bei diesem Absinken durch die Entlüftung angesaugt werden, werden in oben beschriebener Weise durch den bakteriostatisch wirkenden Stoff im Wasser abgetötet, bevor sie zur Auslassöffnung der Patrone gelangen können.

Das erfindungsgemässe Gerät kann somit ohne die Gefahr der Keimvermehrung intermittierend betrieben werden, ohne dass es besonderer Reinigungsmassnahmen nach jeder Benutzung bedarf. Wenn die Patrone verbraucht ist, wird sie ausgewechselt und das Gerät erneut in oben beschriebener Weise mit Wasser gefüllt.

Die Patrone kann mit einem Kationenaustauscher oder einem Anionenaustauscher gefüllt sein. Für eine Verbesserung der Trinkwasserqualität, wie sie vor allem für die Aufbereitung von Trokkennahrung für Kleinstkinder verlangt wird, ist es jedoch besonders zweckmässig, die Patrone mit einem Mischbett, bestehend aus einem Anionenaustauscher, einem Kationenaustauscher sowie einem gesilberten Kationenaustauscher zu füllen.

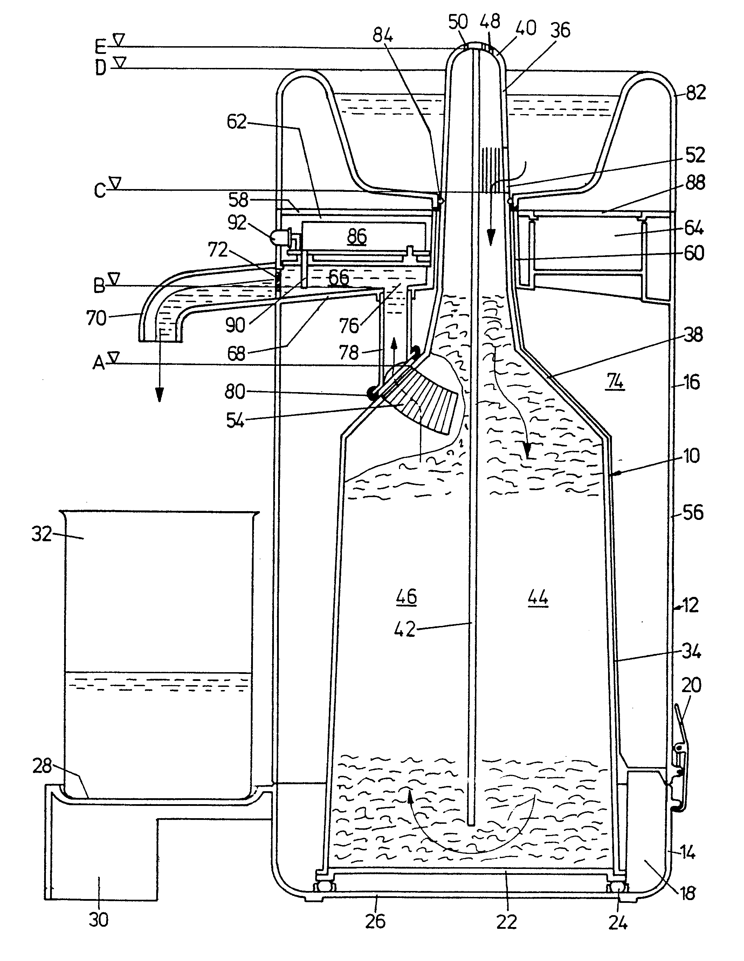

Merkmale zur vorteilhaften Ausgestaltung des erfindungsgemässen Gerätes ergeben sich aus den Unteransprüchen sowie der nachfolgenden Beschreibung einer in der Zeichnung im Vertikalschnitt dargestellten besonders zweckmässigen Ausführungsform.

Das gezeigte Gerät besteht in der Hauptsache aus einer flaschenförmigen Patrone 10, die auswechselbar in einem in seiner Gesamtheit mit 12 bezeichneten Gehäuse aufgenommen ist, welches im wesentlichen Zylinderform hat.

Das Gehäuse ist im Beispielsfall in ein verhältnismässig niedriges Unterteil 14 und ein Oberteil 16 unterteilt, die im zusammengebauten Zustand durch geeignete Mittel wie beispielsweise mehrere an der Innenseite des Gehäusemantels verteilte und nach oben überstehende Radialrippen 18 zueinander zentriert und durch lösbare Befestigungsmittel wie beispielsweise zwei oder mehrere Spannverschlüsse 20 gegeneinander verspannt sind. Die Radialrippen 18 dienen gleichzeitig zur Zentrierung der Patrone 10, die mit ihrem Boden 22 auf einem elastischen Ring 24 am Boden 26 des Gehäuseunterteils aufsitzt.

An der Aussenseite des Gehäuseunterteils 14 ist ferner eine mit einer Vertiefung 28 versehene Stütze 30 zum Aufsetzen eines Auffanggefässes 32 für das zu behandelnde Wasser angeformt.

Die Mantelwand der Patrone 10 gliedert sich der erwähnten Flaschenform entsprechend in einen Bauchabschnitt 34, einen Halsabschnitt 36 und einen diese Abschnitte verbindenden konischen Übergangsabschnitt 38. Der Halsabschnitt 36 geht am oberen Ende in einen kugelkalottenförmigen Abschlussteil 40 über, von dem aus sich in diametraler Quererstreckung durch die Patrone nach abwärts eine Trennwand 42 erstreckt, die unter Ausbildung einer horizontalen Endkante mit Abstand vor dem Patronenboden 22 endet. Dadurch wird das Innere der Patrone im Bereich der Trennwand 42 in zwei Kammern 44, 46 unterteilt, die unterhalb der Trennwand 42 miteinander verbunden sind. Die Kammern 44, 46 sind am oberen Ende des Halsteils durch schmale Entlüftungsschlitze 48, 50 innerhalb des Abschlussteils 40 entlüftet. Weiterhin ist die Kammer 44 im Bereich des Halsabschnitts 36 der Patrone mit einer Einlassöffnung 52 versehen, die von einer Vielzahl enger senkrechter Schlitze gebildet ist, die als Partikelfilter wirken. Die andere Kammer 46 hat in dem konischen Zwischenabschnitt 38 zwischen Bauchteil und Halsteil eine Auslassöffnung 54, die ebenfalls von einer Vielzahl senkrecht verlaufender Schlitze mit der Wirkung eines Partikelfilters gebildet ist. Diese Schlitze sind derart nebeneinander angeordnet, dass sie in der Mitte der Auslassöffnung 54 am höchsten liegen und nach beiden Seiten hin immer tiefer enden.

Die Patrone 10 ist mit Ionenaustauschermaterial, vorzugsweise einem Granulat aus Ionenaustauscherharzen gefüllt und enthält einen zumindest bakteriostatisch wirkenden Stoff wie dissoziiertes Silber. Zweckmässig bildet die Füllung ein sogenanntes Mischbett aus reinen Kationenharzen, reinen Anionenharzen sowie einem zusätzlichen Anteil von gesilberten Kationenharzen, die innerhalb der gesamten Füllung gleichmässig verteilt sind. Die Höhe der Füllung übersteigt die Auslassöffnung 54 und liegt zweckmässig im unteren Teil des Halsabschnitts 36.

Das Gehäuseoberteil 16 besteht in der Hauptsache aus einer zylindrischen Mantelwand 56 und einer oberen ebenen Abschlusswand 58 mit einer zentralen Durchbrechung zur Aufnahme des Halsabschnitts 36 der Patrone 10, von welcher sich ein kragenförmiger Ringteil 60 nach abwärts erstreckt. Zwischen dem kragenförmigen Ringteil 60 und der Mantelwand 56 sind durch ein System von weiteren Wandungen innerhalb des Gehäuseoberteils 16 eine Gerätekammer 62, eine Batteriekammer 64 sowie ein Auslasskanal 66 abgeteilt, der einen radial nach auswärts abfallenden Boden 68 aufweist. An den Auslasskanal 66 schliesst sich ausserhalb der Mantelwand 56 des Gehäuseoberteils 16 eine am äusseren Ende nach unten gekrümmte Auslasstülle 60 an, die zentral über dem Auffanggefäss 32 endet. Die Verbindung zwischen dem Auslasskanal 66 und der Auslasstülle 70 ist im mittleren Bereich durch eine Querwand 72, eine sogenannte Schikane versperrt, unter und über welcher jeweils schmale Durchlassöffnungen für Wasser bzw. Luft ausgespart sind. Unterhalb der vorerwähnten Kammern ist das Gehäuseoberteil 16 in ähnlicher Weise wie das Gehäuseunterteil 14 mit mehreren am Umfang verteilten Radialrippen 74 versehen, die mit Abstand zur Unterkante der Mantelwand 56 enden und an den Innenkanten der Form der Patrone 10 angepasst sind. Die Radialrippen 74 des Gehäuseoberteils 16 fluchten zweckmässig mit den Radialrippen 18 des

Gehäuseunterteils 14, wobei ein solches Rippenpaar radial nach einwärts verbreitert sein kann, um durch Eingriff in eine von oben nach unten durchlaufende Nut in der Mantelwand der Patrone 10 den richtigen Zusammenbau der beiden Gehäuseteile 14, 16 mit der Patrone bezüglich der Drehstellung dieser Teile zueinander zu gewährleisten.

Der Auslasskanal 66 enthält am Boden 68 eine mit einem Kragen versehene Öffnung 76, in welche ein nach abwärts gerichtetes Standrohr 78 eingeklebt oder auf sonstige Weise dauerhaft befestigt ist. Das Standrohr 78 ist am unteren Ende unter Vermeidung horizontaler Wandungsteile stetig bis über den Öffnungsquerschnitt der Auslassöffnung 54 der Patrone 10 erweitert und überdeckt diese im zusammengebauten Zustand mit einer umlaufenden Dichtung 80 an der Öffnungskante. Dabei befindet sich das Standrohr 78 mit seinem nicht erweiterten Bereich unmittelbar oberhalb der mittleren und, wie oben erwähnt, am höchsten gelegenen Schlitze der Auslassöffnung 54.

Auf die obere Abschlusswand 58 des Gehäuseoberteils 16 ist ein rotationssymmetrisch ausgebildeter Trichter 82 aufgesetzt, der eine mit einem Dichtungsring 84 versehene zentrale Durchbrechung aufweist, die sich im aufgesetzten Zustand dichtend an den hindurchragenden Halsabschnitt 36 der Patrone 10 anschmiegt. Die die Einlassöffnung 52 der Patrone 10 bildenden Schlitze enden im zusammengebauten Zustand unmittelbar oberhalb des Dichtungsrings 84, so dass in den Trichter 82 eingefülltes Wasser praktisch vollständig aus dem Trichter 82 in die Patrone 10 abzufliessen vermag.

In der Gerätekammer 62 ist eine bei 86 schematisch angedeutete elektrische Leitwertmesseinrichtung angeordnet, die von einer in die Batteriekammer 64 eingesetzten (nicht gezeigten) Batterie gespeist wird. Die Batterie kann durch eine von einem Deckel 88 verschliessbare Öffnung in der oberen Abschlusswand 58 des Gehäuseoberteils 16 in die Batteriekammer 64 eingesetzt werden, wo ihre Klemmen mit (nicht gezeigten) Anschlusskontakten in leitende Verbindung gelangen. Zwei von der Leitwertmesseinrichtung ausgehende Elektroden, die in der Ebene der Zeichnung hintereinander liegen, so dass nur eine Elektrode 90 sichtbar ist, ragen in den Auslasskanal 66 bis kurz vor dessen geneigten Boden 68. Die Leitwertmesseinrichtung ist in bekannter Weise so ausgebildet, dass sie bei leerem Auslasskanal 66 zur Einsparung von Energie ausgeschaltet ist und sich selbsttätig einschaltet, wenn die beiden Elektroden von Wasser umspült werden. An der Aussenwand der Gerätekammer 62 sind nebeneinander zwei Signallampen angeordnet, von denen in der Zeichnung nur eine Signallampe 92 sichtbar ist. Die eine der beiden Signallampen, die beispielsweise grünes oder weisses Licht erzeugt, leuchtet bei der Einschaltung der Leitwertmesseinrichtung auf und signalisiert deren Betriebsbereitschaft. Die andere Signallampe, die beispielsweise rot aufleuchtet, spricht an, wenn der gemessene Leitwert die zulässige Grösse übersteigt, und

zeigt damit an, dass die Patrone erschöpft ist und ausgewechselt werden muss. Die beiden Signallampen können zweckmässig Leuchtdioden sein.

Die vorstehende Beschreibung des Geräteaufbaus führt zu fünf charakteristischen Niveauhöhen, die in der Zeichnung mit den Buchstaben A, B, C, D und E bezeichnet sind und deren Bedeutung aus der nachfolgenden Beschreibung der Wirkungsweise des Gerätes erkennbar wird. Diese Niveauhöhen sind im einzelnen wie folgt bestimmt:

A = höchste Stelle der Auslassöffnung 54,
B = obere Endkante des Standrohrs 78,
C = tiefste Stelle der Einlassöffnung 52,
D = Oberkante des Trichters 82,
E = Entlüftungsschlitze 48, 50 der Kammer 44 bzw. 46 in der Patrone 10.

Das beschriebene Gerät arbeitet wie folgt:

Es sei angenommen, dass eine betriebsfähige Batterie in die Batteriekammer 64 eingesetzt ist und das Gehäuse 12 durch Abnahme des Trichters 82 und des Gehäuseoberteils 16 geöffnet ist. Nach dem Einsetzen einer Patrone 10 in der richtigen Drehstellung in das Gehäuseunterteil 14 wird das Gehäuseoberteil 16 in entsprechender Drehstellung aufgesetzt und mittels der Spannverschlüsse 20 am Gehäuseunterteil 14 festgelegt. Dabei bewirkt der elastische Ring 24 am Gehäuseboden 26, dass sich der Zwischenabschnitt 38 der Mantelwandung der Patrone gegen die Radialrippen 74 des Gehäuseoberteils 16 und gleichzeitig im Bereich der Auslassöffnung 54 gegen den Dichtungsring 80 am erweiterten unteren Ende des Standrohrs 78 mit der Folge einer dichtenden Verbindung an dieser Stelle abstützt.

Hierauf wird der Trichter 82 auf den Halsabschnitt 36 der Patrone 10 bis zum Aufsitzen auf der oberen Abschlusswand 58 des Gehäuseoberteils 16 aufgeschoben, und das Auffanggefäss 32 wird auf die Stütze 30 aufgesetzt. Damit ist das Gerät betriebsbereit.

Bevor jedoch behandeltes Wasser gewonnen werden kann, muss die Patrone durch wiederholtes Eingiessen von Wasser in den Trichter 82 bis zur Niveauhöhe B gefüllt werden. Während des Füllens gestatten die Entlüftungsschlitze 48, 50 im Abschlussteil 40 der Patronenwandung 10, dass die Luft aus den beiden Kammern 44, 46 entweichen kann, und zwar aus der Kammer 46 auch dann noch, wenn das Wasser darin bereits die Niveauhöhe A erreicht hat. Sobald der Wasserspiegel bis zur Niveauhöhe B angestiegen ist, beginnt das Wasser, durch den Auslasskanal 66 und die Auslasstülle 70 in das Auffanggefäss 32 zu fliessen. Da das abfliessende Wasser die gesamte Ionenaustauscherfüllung der Patrone 10 passiert hat, wird seine Qualität in der erwünschten Weise verbessert sein, d.h. je nach der Art der verwendeten Ionenaustauscher, z.B. entsalzt und von Schwermetallionen befreit sein. Gleichzeitig wird der in der Patrone enthaltene Stoff wie dissoziierbares Silber wirksam dafür sorgen, dass sich Keime im Gerät nicht vermehren. Es dürfte jedoch vorteilhaft sein, dieses mit der letzten Füllung des Trichters 82 abfliessende Wasser noch nicht bestimmungsgemäss weiterzuverwenden, sondern zu verwerfen.

Mit jedem weiteren Aufguss einer bestimmten Menge Wasser in den Trichter 82 wird dann die entsprechende Menge behandeltes Wasser in das Auffanggefäss 32 abfliessen. Da der Wasserdurchsatz durch die Patrone von der Ionenaustauscherfüllung stark gehemmt wird, treten innerhalb der Patrone keinerlei Verwirbelungen auf, und das Wasser durchströmt die Patrone unter Beibehaltung der im Ruhezustand vorhandenen Schichtung, so dass gewährleistet ist, dass das die Patrone durchfliessende Wasser einer gleichmässigen Behandlung unterzogen wird.

Mit dem Aufgiessen von Frischwasser in den Trichter 82 wird zunächst der Wasserpegel innerhalb der Kammer 44 und dann auch innerhalb der Kammer 46 bis zur Höhe des Wasserstandes innerhalb des Trichters 82 steigen. Weiterhin wird sich auch der Auslasskanal 66 aufgrund des Widerstandes, den die Schikane 72 dem abfliessenden Wasser entgegensetzt, zunehmend füllen, wobei die im Auslasskanal 66 enthaltene Luft durch die Öffnung oberhalb der Schikane 72 in die Auslasstülle 70 abzuströmen vermag. Dadurch werden die Elektroden 90 der Leitwertmesseinrichtung 86 von behandeltem Wasser umspült, und die Leitwertmesseinrichtung 86 schaltet sich ein, was durch Aufleuchten der entsprechenden Signallampe 92 angezeigt wird.

Mit dem durch den Innenwiderstand der Patrone 10 und die Schikane 72 verzögerten Abfliessen des behandelten Wassers in das Auffanggefäss 32 sinken die Wasserstände im Trichter 82 und in dem Kammern 44, 46 mit der Folge, dass Luft aus der Umgebung durch die Entlüftungsschlitze 48, 50 in die Kammern 44, 46 angesaugt wird. Dadurch können auch Bakterien (Keime) in die Kammern 44, 46 gelangen. Für die Kammer 44 ist dies bedeutungslos, da diese Kammer ohnehin nach dem vollständigen Absinken des Wassers in der Patrone mit der Umgebungsluft in Verbindung steht. Bakterien, die hierbei in die Kammer 46 eingesaugt werden, können nicht zur Auslassöffnung 54 gelangen, da das Wasser in der Kammer 46 nicht unter die Niveauhöhe B absinken kann und dadurch diese Bakterien durch das gelöste Silber des über der Niveauhöhe A bis zur Niveauhöhe B stehenden Wassers abgetötet werden. Gegebenenfalls kann zur weiteren Reduzierung des Keimbefalls der Entlüftungsschlitz 50 der Kammer 46 mit einem Bakterienfilter versehen werden, dessen Durchlassvermögen für Luft dadurch gewährleistet bleibt, dass die Niveauhöhe E dieses Entlüftungsschlitzes stets über der Niveauhöhe D des oberen Trichterrandes liegt und dadurch ein solcher Bakterienfilter im Betrieb stets trocken bleibt. Wenn schliesslich das gesamte eingefüllte Wasser aus dem Trichter 82 in die Patrone abgeflossen ist und sich der Wasserpegel in den Kammern 44, 46 auf die Niveauhöhe B abgesenkt hat, hört das Ausfliessen von behandeltem Wasser in das Auffanggefäss 32 auf und der Auslasskanal 66 und die Auslasstülle 70 trocknet bis zur nächsten Benutzung des Gerätes aus. Dadurch wird eine Vermehrung etwaiger Bakterienreste an diesen Stellen vermieden. Das im Standrohr 78 bis zu dessen Oberkante stehende Wasser enthält ausreichend dissoziiertes Silber, so dass darin eine Keimentfaltung ausgeschlossen ist. Das Gerät ist damit für die Behandlung einer weiteren Wassermenge nach einer beliebigen Standzeit ständig betriebsbereit.

Wenn die Füllung der Patrone 10 erschöpft ist, wird die Leitwertmesseinrichtung 86 bei der nächsten Inbenutzungnahme des Geräts durch die entsprechende Signallampe 92 diesen Zustand anzeigen, so dass der Benutzer des Geräts die Betriebsbereitschaft durch Auswechseln der Patrone und anschliessendes erneutes Füllen des Geräts in der oben beschriebenen Weise wiederherstellen kann.

Wie das Ausführungsbeispiel zeigt, schafft die Erfindung ein vom Wasserleitungsnetz und — bei einem batteriegespeisten Leitwertmessgerät — auch vom Stromnetz unabhängiges Gerät, das dennoch auch von Laien wie insbesondere Hausfrauen und Müttern bei blosser Beachtung der Anzeige an den Signallampen fehlerlos bedient werden kann. Das Gerät ist einfach zu zerlegen. Insbesondere gestattet der abnehmbare Trichter eine rasche und gründliche Reinigung. In ähnlicher Weise lässt sich bei entsprechender Konstruktion auch der Auslauf abnehmbar zum Zwecke der Reinigung gestalten, wobei ggf. Trichter und Auslauf zu einem einzigen Bauteil vereinigt werden können.

## Patentansprüche

1. Gerät zur Verbesserung der Qualität von Trinkwasser, mit einem Gehäuse, von welchem eine wenigstens einen Ionenaustauscher sowie einen zumindest bakteriostatisch wirkenden Stoff wie insbesondere Silber in dissoziierbarer Form enthaltende Patrone auswechselbar aufgenommen ist, gekennzeichnet durch die Kombination folgender Merkmale:

a) die Patrone (10) ist als im wesentlichen geschlossener aufrecht stehender Behälter ausgebildet und von einer mit Abstand vor dem Behälterboden (22) endenden Trennwand (42) in eine an eine Einlassöffnung (52) anschliessende, abwärts durchströmte erste Kammer (44) und eine zu einer Auslassöffnung (54) führende, aufwärts durchströmte zweite Kammer (46) unterteilt,

b) die Einlassöffnung (52) der Patrone (10) ist wesentlich höher gelegen als die Auslassöffnung (54),

c) die Einlassöffnung (52) und die Auslassöffnung (54) der Patrone (10) sind mit Partikelfiltern versehen,

d) wenigstens die zweite Kammer (46) der Patrone (10) ist über die Höhe der Einlassöffnung (52) hinaus nach oben verlängert und am oberen Ende (bei 48 bzw. 50) entlüftet,

e) an die Einlassöffnung (52) der Patrone (10) ist gehäuseseitig ein Einfülltrichter (82) dichtend anschliessbar, dessen Oberkante wesentlich tiefer als die Entlüftung (48, 50) liegt, und

f) an die Auslassöffnung (54) der Patrone (10) ist gehäuseseitig ein Standrohr (78) anschliessbar, das mit seinem unterhalb der Einlassöffnung (52) liegenden oberen Ende in einen mit Gefälle ausgebildeten Auslasskanal (66) mündet.

2. Gerät nach Anspruch 1, dadurch gekennzeichnet, dass die Aussenwandung (34, 36, 38) der Patrone (10) im wesentlichen rotationssymmetrisch ausgebildet ist.

3. Gerät nach Anspruch 2, dadurch gekennzeichnet, dass die Trennwand (42) innerhalb der Patrone (10) diametral verläuft.

4. Gerät nach Anspruch 2 oder 3, dadurch gekennzeichnet, dass die Patrone (10) Flaschenform aufweist.

5. Gerät nach Anspruch 4, dadurch gekennzeichnet, dass die Auslassöffnung (54) in einem konischen Übergangsabschnitt (38) der Mantelwandung der Patrone (10) zwischen Flaschenbauch (34) und Flaschenhals (36) angeordnet ist.

6. Gerät nach Anspruch 5, dadurch gekennzeichnet, dass die Auslassöffnung (54) eine in Umfangsrichtung verbreiterte Quererstreckung aufweist, wobei die obere Begrenzungskante der Auslassöffnung von einer höchstgelegenen Stelle nach einer oder beiden Seiten abfällt, und dass sich das Standrohr (78) am unteren Ende stetig auf die volle Breite der Auslassöffnung (54) erweitert.

7. Gerät nach einem der Ansprüche 4 bis 6, dadurch gekennzeichnet, dass der Einfülltrichter (82) eine zentrale Durchbrechung aufweist, mit der er den Halsabschnitt (36) der Mantelwandung der Patrone (10) dichtend aufnimmt, und dass die Einlassöffnung (52) am Halsabschnitt (36) unmittelbar oberhalb der Durchbrechung angeordnet ist.

8. Gerät nach Anspruch 7, dadurch gekennzeichnet, dass der Trichter (82) als vom Gehäuseoberteil (16) abnehmbares getrenntes Bauteil ausgebildet ist.

9. Gerät nach Anspruch 7 oder 8, dadurch gekennzeichnet, dass der Trichter (82) und das die Patrone (10) aufnehmende Gehäuse (12) im wesentlichen rotationssymmetrisch ausgebildet und im Aussendurchmesser aneinander angepasst sind.

10. Gerät nach einem der vorhergehenden Ansprüche, dadurch gekennzeichnet, dass das Gehäuse (12) geteilt ausgebildet ist und Mittel (20) vorgesehen sind, durch welche die beiden Gehäuseteile gegeneinander verspannbar sind.

11. Gerät nach Anspruch 10, dadurch gekennzeichnet, dass die Teilungsebene horizontal verläuft.

12. Gerät nach einem der vorhergehenden Ansprüche, dadurch gekennzeichnet, dass wenigstens ein Teil des Auslaufkanals (66) mit dem Gehäuse (12) aus einem Stück ausgebildet ist und das Standrohr (78) in eine Bodenöffnung (76) des Kanals fest eingesetzt ist.

13. Gerät nach einem der vorangehenden Ansprüche, dadurch gekennzeichnet, dass innerhalb des Gehäuses (12) eine vorzugsweise batteriebetriebene Leitwertmesseinrichtung (86) angeordnet ist, deren Elektroden (90) in den Auslasskanal (66) ragen.

14. Gerät nach Anspruch 13, dadurch gekennzeichnet, dass im Auslasskanal (66) hinter den Elektroden (90) ein Stauorgan (72) angeordnet ist.

15. Gerät nach einem der vorhergehenden Ansprüche, dadurch gekennzeichnet, dass die Entlüftungsöffnungen (48, 50) Bakterienfilter enthalten.

## Claims

1. An apparatus for improving the quality of drinking water, with a housing which accommodates an exchangeable cartridge containing at least one ion exchanger and also a material acting at least bacteriostatically, such as in particular silver in dissociable form, characterised by a combination of the following features:

a) the cartridge (10) is in the form of a substantially closed upright container and is divided by a partition (42) terminating at a distance from the container bottom (22) into a first chamber (44) which adjoins an inlet opening (52) and through which the flow is downward and into a second chamber (46) which leads to an outlet opening (54) and through which the flow is upward;

b) the inlet opening (52) of the cartridge (10) is situated substantially higher than the outlet opening (54);

c) the inlet opening (52) and the outlet opening (54) of the cartridge (10) are provided with particle filters;

d) at least the second chamber (46) of the cartridge (10) is extended upwards above the level of the inlet opening (52) and is vented at the top (at 48 and 50);

e) a filling funnel (82) can be connected fluidtightly to the inlet opening (52) of the cartridge (10) at the housing end, its upper edge being situated substantially lower than the vent (48, 50), and

f) an upright pipe (78) can be connected to the outlet opening (54) of the cartridge (10) at the housing end, discharging at its upper end situated below the inlet opening (52) into an inclined outlet duct.

2. An apparatus according to Claim 1, characterised in that the outer wall (34, 36, 38) of the cartridge (10) is of substantially rotationally symmetrical shape.

3. An apparatus according to Claim 2, characterised in that the partition (42) extends diametrally inside the cartridge (10).

4. An apparatus according to Claim 2 or 3, characterised in that the cartridge (10) is bottle-shaped.

5. An apparatus according to Claim 4, characterised in that the outlet opening (54) is disposed in a tapered transitional portion (38) of the outer wall of the cartridge (10) between the bottle body (34) and bottle neck (36).

6. An apparatus according to Claim 5, characterised in that the outlet opening (54) extends transversely and is widened in a peripheral direction, the upper boundary edge of the outlet opening descending from a highest point on one or both sides, and in that the upright pipe (78) is widened continuously at its lower end to the full width of the outlet opening (54).

7. An apparatus according to any of Claims 4 to 6, characterised in that the filling funnel (82) has a central aperture with which it accommodates fluid-tightly the neck portion (36) of the outer wall of the cartridge (10), and in that the inlet opening (52) is provided on the neck portion (36) immediately above the aperture.

8. An apparatus according to Claim 7, characterised in that the funnel (82) is formed as a separate component detachable from the housing upper part (16).

9. An apparatus according to Claim 7 or 8, characterised in that the funnel (82) and the housing (12) accommodating the cartridge (10) are of substantially rotationally symmetrical shape and are of matching external diameter.

10. An apparatus according to any of the preceding Claims, characterised in that the housing (12) is divided and means (20) are provided by means of which the two housing parts can be clamped to one another.

11. An apparatus according to Claim 10, characterised in that the dividing plane extends horizontally.

12. An apparatus according to any of the preceding Claims, characterised in that at least part of the outlet duct (66) is formed in one piece with the housing (12) and the upright pipe (78) is securely fitted in a bottom opening (76) of the duct.

13. An apparatus according to any of the preceding Claims, characterised in that a conductance measuring instrument, preferably battery-powered, is provided inside the housing (12) and its electrodes (90) project into the outlet duct (66).

14. An apparatus according to Claim 13, characterised in that a barrage member (72) is provided downstream of the electrodes (90).

15. An apparatus according to any of the preceding Claims, characterised in that the vent openings (48, 5) contain bacteria filters.


**Revendications**

1. Appareil pour améliorer la qualité de l'eau potable, du genre comportant une enveloppe (12) dans laquelle se loge de façon interchangeable une cartouche (10) contenant au moins un échangeur d'ions ainsi qu'une substance ayant au moins une activité bactériostatique, notamment de l'argent sous forme dissociable, caractérisé par le fait que:

a) la cartouche (10) est essentiellement constituée par un récipient fermé, disposé verticalement et divisé par une cloison (42), dont l'extrémité inférieure se trouve à une certaine distance du fond (22) du récipient, en une première chambre (44) qui communique avec un orifice d'admission (52) et dans laquelle la circulation est descendante, et en une seconde chambre (46) qui aboutit à un orifice de sortie (54) et dans laquelle la circulation est ascendante;

b) l'orifice d'admission (52) de la cartouche (10) est situé à un niveau sensiblement plus élevé que celui de l'orifice de sortie (54);

c) l'orifice d'admission (52) et l'orifice de sortie (54) de la cartouche (10) sont pourvus de filtres à particules;

d) au moins la seconde chambre (46) de la cartouche (10) est prolongée vers le haut, au-dessus du niveau de l'orifice d'admission (52), et ventilée à son extrémité supérieure (en 48 et 50);

e) l'orifice d'admission (52) de la cartouche (10) peut être raccordé hermétiquement, du côté de l'enveloppe (12), à un entonnoir de remplissage (82) dont le bord supérieur est situé à un niveau sensiblement inférieur à celui des orifices de ventilation (48, 50), et

f) un tuyau vertical (78) peut être raccordé, du côté de l'enveloppe (12), à l'orifice de sortie (54) de la cartouche (10), l'extrémité supérieure du tuyau vertical (78), qui se trouve à un niveau inférieur à celui de l'orifice d'admission (52), débouchant dans une conduite d'évacuation (66) qui présente une certaine inclinaison vers l'extérieur.

2. Appareil selon la Revendication 1, caractérisé par le fait que la paroi externe (34, 36, 38) de la cartouche (10) a sensiblement une forme à symétrie de révolution.

3. Appareil selon la Revendication 2, caractérisé par le fait que la cloison de séparation (42) est disposée diamètralement à l'intérieur de la cartouche (10).

4. Appareil selon l'une ou l'autre des Revendications 1 et 2, caractérisé par le fait que la cartouche a sensiblement la forme d'une bouteille.

5. Appareil selon la Revendication 4, caractérisé par le fait que l'orifice de sortie (54) est disposé dans une partie intermédiaire (38) de la paroi de la cartouche (10) qui se trouve entre le ventre (34) et le col (36) de la bouteille.

6. Appareil selon la Revendication 5, caractérisé par le fait que l'orifice de sortie (54) s'étend sur un arc élargi dans le sens circonférentiel horizontal, de façon que le bord supérieur qui délimite l'orifice de sortie s'abaisse de chaque côté d'un point central de hauteur maximale, et que le tuyau vertical (78) s'élargit à sa base sur toute la largeur de l'orifice de sortie (54).

7. Appareil selon l'une quelconque des Revendications 4 à 6, caractérisé par le fait que l'entonnoir de remplissage (82) présente une ouverture centrale dans laquelle s'ajuste hermétiquement la partie (36) qui constitue le col de la paroi de la cartouche (10), et que l'orifice d'admission (52) est formé dans ce col immédiatement au-dessus de ladite ouverture centrale.

8. Appareil selon la Revendication 7, caractérisé par le fait que l'entonnoir (82) est constitué par un élément amovible par rapport à la partie supérieure (16) de l'enveloppe (12).

9. Appareil selon l'une ou l'autre des Revendications 7 ou 8, caractérisé par le fait que l'entonnoir (82) et l'enveloppe (12) qui reçoit la cartouche (10) ont sensiblement une forme à symétrie de révolution et des diamètres extérieurs identiques.

10. Appareil selon l'une quelconque des Revendications 1 à 9, caractérisé par le fait que l'enveloppe (12) est divisée en deux tronçons et qu'il est prévu des dispositifs genre fermoir (20) qui permettent d'assembler les deux éléments de l'enveloppe sous pression mécanique.

11. Appareil selon la Revendication 10, caractérisé par le fait que le plan d'assemblage de ces éléments d'enveloppe est disposé horizontalement.

12. Appareil selon l'une quelconque des Revendications 1 à 11, caractérisé par le fait qu'une partie au moins de la conduite d'évacuation (66) fait partie intégrante de l'enveloppe (12) et que le tuyau vertical (78) est ajusté de façon inamovible dans une ouverture (76) pratiquée dans le fond de ladite conduite (66).

13. Appareil selon l'une quelconque des Revendications 1 à 12, caractérisé par le fait qu'il est prévu à l'intérieur de l'enveloppe (12) un ohmmètre (86) alimenté de préférence par batterie et dont les électrodes (90) font saillie à l'intérieur de la conduite d'évacuation (66).

14. Appareil selon la Revendication 13, caractérisé par le fait qu'un organe de retenue (72) est prévu à l'intérieur de la conduite d'évacuation (66) en aval des électrodes (90).

15. Appareil selon l'une quelconque des Revendications 1 à 14, caractérisé par le fait que les orifices de ventilation (48, 50) contiennent des filtres à bactéries.

0 166 022